# EUROPÄISCHE PATENTSCHRIFT

(11) **EP 2 522 581 B1**
(45) Veröffentlichungstag und Bekanntmachung des Hinweises auf die Patenterteilung: **27.11.2013**
(21) Anmeldenummer: 12002940.0
(22) Anmeldetag: 26.04.2012
(51) Int. Cl.: B65B 9/04, B65B 59/04, B29C 33/30, B65B 59/02

(54) **Arbeitsstation für eine Verpackungsmaschine und Verfahren zum Werkzeugwechsel**
Workstation for a packaging machine and method for swapping tools
Station de travail pour une machine d'emballage et procédé de changement d'outil

(30) Priorität: 10.05.2011 DE 102011101053
(43) Veröffentlichungstag der Anmeldung: 14.11.2012
(73) Patentinhaber: MULTIVAC Sepp Haggenmüller GmbH & Co KG, 87787 Wolfertschwenden (DE)
(72) Erfinder: Ehrmann, Elmar, 87730 Bad Grönenbach (DE); Sparakowski, Helmut, 88459 Tannheim (DE)
(74) Vertreter: Grünecker, Kinkeldey, Stockmair & Schwanhäusser

(56) Entgegenhaltungen:
- EP-A1- 0 895 933
- EP-A1- 2 110 219
- DE-A1- 1 586 223
- US-A- 5 755 653

## Beschreibung

Die vorliegende Erfindung bezieht sich auf eine Arbeitsstation für eine Verpackungsmaschine gemäß dem Oberbegriff des Anspruchs 1, sowie auf ein Verfahren zum Entnehmen eines Unterwerkzeugs aus einer Arbeitsstation.

Verpackungsmaschinen zum Verpacken von Packgut mit Verpackungsfolienmaterial sind hinreichend bekannt. Beispielsweise offenbaren die DE 10 2007 013 698 A1 oder die DE 10 2009 022 545 A1 Tiefziehmaschinen als speziellen Typ von Verpackungsmaschinen. Bei diesen Tiefziehverpackungsmaschinen werden in einer Unterfolie Verpackungsmulden tiefgezogen, mit einem Produkt bzw. Packgut gefüllt und anschließend mit einer Deckelfolie versiegelt. Nach dem Versiegeln werden die Verpackungen voneinander vereinzelt. Zu diesem Zweck sind üblicherweise Schneideinrichtungen in Längs- und Querrichtung der Arbeitsrichtung der Verpackungsmaschine vorgesehen. Solche Tiefziehverpackungsmaschinen umfassen üblicherweise mehrere Arbeitsstationen, nämlich eine Formstation zum Formen von Verpackungsmulden, eine Siegelstation zum Versiegeln der Deckelfolie mit der Unterfolie sowie eine oder mehrere Schneidstationen. Auch andere Typen von Verpackungsmaschinen wie Schalenverschließmaschinen (Traysealer) weisen eine oder mehrere Arbeitsstationen insbesondere zum Versiegeln von Verpackungen sowie gegebenenfalls zum Evakuieren und/oder Begasen der Verpackungen vor dem Versiegeln auf.

EP 2 110 219 A offenbart eine Tiefziehverpackungsmaschine mit einem Werkzeugwechselwagen zum Wechseln eines Formwerkzeugunterteils horizontal in Folientransportrichtung.

Zu Wartungszwecken oder für einen Formatwechsel, d.h. für einen Wechsel der Werkzeuge der Arbeitsstation zum Erzeugen eines anderen Verpackungsformats, kann es erforderlich sein, das Werkzeug einer Arbeitsstation aus dieser Station zu entnehmen. Besonders aufwendig und mit einem besonders langen Stillstand der Verpackungsmaschine verbunden ist dies, wenn die Arbeitsstation als Werkzeuge ein Oberwerkzeug und ein darunter angeordnetes Unterwerkzeug aufweist. In solch einem Fall ist das Unterwerkzeug bisher nur dann für eine Entnahme zugänglich, wenn zunächst das Oberwerkzeug entfernt wurde.

Aufgabe der Erfindung ist es, eine Arbeitsstation bzw. ein Verfahren zur Verfügung zu stellen, die mit konstruktiven möglichst einfachen Mitteln den Arbeitsaufwand zum Entnehmen oder Auswechseln eines Werkzeugteils verringern.

Diese Aufgabe wird gelöst durch eine Arbeitsstation mit den Merkmalen des Anspruchs 1 bzw. durch ein Verfahren zum Entnehmen eines Unterwerkzeugs aus einer Arbeitsstation mit den Merkmalen des Anspruchs 13. Vorteilhafte Weiterbildungen der Erfindung sind in den Unteransprüchen angegeben.

In der erfindungsgemäßen Arbeitsstation ist ein Hubwerk zum Bewegen wenigstens eines von Ober- und Unterwerkzeug zwischen wenigstens einer abgesenkten Stellung und wenigstens einer angehobenen Stellung vorgesehen. Je nachdem, ob beide Werkzeugteile oder welches der beiden Werkzeugteile durch das Hubwerk bewegbar ist, entspricht eine dieser beiden Stellungen einer geöffneten Stellung des von Ober- und Unterwerkzeug gemeinsam gebildeten Werkzeugs, in der Ober- und Unterwerkzeug entweder unmittelbar aneinander anliegen oder nur einen sehr kleinen Abstand voneinander haben, während die beiden Werkzeugteile in der anderen, geöffneten Stellung einen größeren Abstand voneinander einnehmen. Beispielsweise kann in der geöffneten Stellung des Werkzeugs eine Verpackungsfolie durch das Werkzeug hindurch transportiert werden, während Ober-und Unterwerkzeug in der geschlossenen Stellung auf die Verpackungsfolie einwirken, um diese zu Verpackungsmulden zu formen.

Erfindungsgemäß sind nun das Oberwerkzeug und das Unterwerkzeug in der geschlossenen Stellung, d.h. in derjenigen Stellung, in der sie aneinander anliegen oder den kleineren Abstand voneinander haben als in der anderen, geöffneten Stellung, durch eine lösbare Kopplung miteinander koppelbar, um gemeinsam aus der Arbeitsstation entnehmbar zu sein. Dies erleichtert das Entnehmen insbesondere des Unterwerkzeugs und einen Werkzeugwechsel erheblich. Statt zunächst das Oberwerkzeug und anschließend das Unterwerkzeug entnehmen zu müssen, können nun in einem einzigen Arbeitsschritt Ober- und Unterwerkzeug gemeinsam aus der Arbeitsstation entnommen werden. Auch beim erneuten Einsetzen von Ober- und Unterwerkzeug in die Arbeitsstation wird ein Arbeitsschritt eingespart. Dies verringert den Arbeitsaufwand für den Werkzeugwechsel und verkürzt Standzeiten der Arbeitsstation bzw. der gesamten Verpackungsmaschine erheblich.

Vorzugsweise umfasst die Kopplung mechanische und/oder magnetische Befestigungselemente, mittels derer das Oberwerkzeug und das Unterwerkzeug lösbar miteinander gekoppelt werden können. Solche mechanischen und/oder magnetischen Befestigungselemente können besonders gut die Gewichtskräfte des Unterwerkzeugs aufnehmen, wenn dieses an das Oberwerkzeug angekoppelt ist und angehoben wird.

In einer konstruktiv vergleichsweise einfachen Variante könnte die Kopplung eine oder mehrere Schrauben umfassen. Vorzugsweise sind dabei mehrere Schrauben vorgesehen, um die Gewichtskräfte des Unterwerkzeugs an mehreren Punkten tragen zu können. Bei diesen Schrauben kann es sich um Zugschrauben handeln, die von einem Bediener der Arbeitsstation durch eines der beiden Werkzeugteile hindurch in das andere Werkzeugteil geschraubt werden.

In einer komfortableren Variante umfasst die Kopplung wenigstens einen Elektromagneten. Dieser Elektromagnet kann bestromt und aktiviert werden, beispielsweise durch Anschluss einer externen Stromversorgung an eines der beiden Werkzeugteile. Er kann dann mit einem entsprechenden Gegenmagneten am jeweils gegenüberliegenden Werkzeugteil zusammenwirken. Diese Ausführungsform hat den Vorteil, dass lediglich die Stromversorgung für den Elektromagneten angeschlossen bzw. ein Schalter betätigt werden muss, um das Unterwerkzeug mit dem Oberwerkzeug zu koppeln, sodass diese Art der Kopplung für den Bediener der Arbeitsstation sehr komfortabel ist.

Ebenso komfortabel wäre eine Variante, in der die Kopplung wenigstens eine formschlüssige, vorzugsweise ansteuerbare, mechanische Verriegelungsvorrichtung aufweist. Auch solch eine ansteuerbare Verriegelungsvorrichtung vermindert den Arbeitsaufwand für den Maschinenbediener beim Koppeln von Ober- und Unterwerkzeug. Die Verriegelungsvorrichtung könnte Verriegelungselemente oder einen Riegel aufweisen, der bei entsprechender Ansteuerung mit einem komplementären Verriegelungselement am gegenüberliegenden Werkzeugteil in Eingriff gelangt, um die beiden Werkzeugteile miteinander zu koppeln.

Denkbar wäre es, dass solch eine ansteuerbare mechanische Verriegelungsvorrichtung händisch, elektrisch und/oder mittels Druckluft antreibbar ist. Letztere Varianten erfordern zwar eine elektrische und/oder eine Druckluftversorgung wenigstens eines der beiden Werkzeugteile, bieten dann aber den Vorteil einer komfortablen Bedienung der ansteuerbaren Verriegelungsvorrichtung. Im Bereich von Verpackungsmaschinen sind üblicherweise ohnehin Strom- und Druckluftversorgung vorhanden.

Zweckmäßig ist es, wenn zwei seitliche Transportketten für die Verpackungsfolie vorgesehen sind und die maximale Abmessung des Unterwerkzeugs quer zu einer Transportrichtung der Verpackungsfolie kleiner ist als der Abstand der beiden Transportketten voneinander. Denn dies ermöglicht es, das Unterwerkzeug zwischen den beiden Transportketten nach oben anzuheben und aus der Arbeitsstation zu entfernen, ohne dass für dieses Anheben des Unterwerkzeugs die Transportkette oder sogar eine der seitlichen Kettenführungen aus der Arbeitsstation ausgebaut werden müssten.

In einer Variante der erfindungsgemäßen Arbeitsstation ist das Unterwerkzeug mittels des Hubwerks anhebbar und absenkbar, und das Unterwerkzeug ist lösbar mit dem Hubwerk verbindbar. Dies ermöglicht es, das Unterwerkzeug nicht nur lose auf das Hubwerk aufzulegen, sondern das Unterwerkzeug fest mit dem Hubwerk zu verbinden, um eine exaktere Bewegung und Positionierung des Unterwerkzeugs zu ermöglichen und den Betrieb der Arbeitsstation auf diese Weise zu verbessern.

Bevorzugt ist ferner eine Verstelleinrichtung zum Verstellen der Position von Ober-und/oder Unterwerkzeug in einer Transportrichtung der Verpackungsfolie vorgesehen, d.h. üblicherweise in Längsrichtung der Arbeitsstation. Dies ermöglicht es, die Arbeitsstation an verschiedene Abzugslängen der Verpackungsfolie in einer Verpackungsmaschine anzupassen, d.h. an verschiedene Vorschublängen des Verpackungsmaterials in einem Arbeitstakt bei intermittierendem Betrieb der Arbeitsstation.

Bei einer solchen Verstelleinrichtung ist es besonders günstig, wenn diese wenigstens eine Führungsschiene aufweist, um das Ober- und/oder das Unterwerkzeug einfacher verlagern und gleichzeitig präziser positionieren zu können.

Der Komfort für den Bediener der Arbeitstation kann noch weiter verbessert werden, indem an wenigstens einer vorgegebenen Werkzeugwechselposition an der Arbeitsstation ein Werkzeugwechselwagen wenigstens teilweise in die Arbeitsstation einfahrbar ist. Ein solcher Werkzeugwechselwagen kann das Entnehmen von Ober- und Unterwerkzeug erheblich erleichtern. Er verfügt häufig über einen Ausleger, der oberhalb der beiden Werkzeuge positioniert wird. Dieser Ausleger kann mit den bereits miteinander gekoppelten Werkzeugteilen verbunden werden und angehoben werden, um Ober- und Unterwerkzeug aus der Arbeitsstation herauszuheben. Die Verwendung eines solchen Werkzeugwechselwagens und eine Werkzeugwechselposition zum leichteren Einführen dieses Werkzeugwechselwagens in die Arbeitsstation sind bei der erfindungsgemäßen Arbeitsstation deshalb besonders vorteilhaft, weil erfindungsgemäß das Ober- und Unterwerkzeug miteinander gekoppelt werden und beim Entnehmen der Werkzeugteile das gemeinsame Gewicht angehoben werden muss.

Die Erfindung bezieht sich auch auf eine Verpackungsmaschine mit einer Arbeitstation einer der vorstehend beschriebenen Varianten, sowie auf ein Verfahren zum Entnehmen eines Unterwerkzeugs aus einer Arbeitsstation einer Verpackungsmaschine. Dabei weist die Arbeitsstation ein Oberwerkzeug und ein unterhalb des Oberwerkzeugs angeordnetes Unterwerkzeug auf, und ein Hubwerk ist zum Bewegen wenigstens eines dieser beiden Werkzeugteile zwischen einer abgesenkten Stellung und wenigstens einer angehobenen Stellung vorgesehen, sodass Ober- und Unterwerkzeug in der einen der beiden Stellungen aneinander anliegen oder einen kleineren Abstand voneinander haben als in der anderen Stellung, während sie in der anderen Stellung weiter voneinander beabstandet sind. Das erfindungsgemäße Verfahren zeichnet sich aus durch ein Koppeln von Oberwerkzeug und Unterwerkzeug in derjenigen Stellung, in der sie aneinander anliegen oder den kleineren Abstand voneinander haben als in der anderen Stellung, wobei dieses Koppeln durch eine lösbare Kopplung erfolgt, und wobei ferner das Oberwerkzeug mit dem an das Oberwerkzeug gekoppelten Unterwerkzeug gemeinsam aus der Arbeitstation entnommen werden. Dieses Verfahren bietet die vorstehend bereits geschilderten Vorteile, insbesondere eine Reduktion der Arbeitsschritte zum Wechseln des Unterwerkzeugs.

Denkbar ist es insbesondere, dass das Unterwerkzeug beim Entnehmen aus der Arbeitsstation zwischen zwei seitlichen Transportketten für die Verpackungsfolie nach oben gehoben wird. Damit kann der Werkzeugwechsel bzw. das Entnehmen des Unterwerkzeugs erfolgen, ohne dass die Transportketten oder eine zur Führung dieser Transportketten vorgesehene Kettenführung entfernt werden müssten.

Wie bereits geschildert bieten sich weitere Vorteile, wenn ein Werkzeugwechselwagen wenigstens teilweise in die Arbeitsstation eingefahren wird und das Oberwerkzeug sowie das mit dem Oberwerkzeug gekoppelte Unterwerkzeug aus der Arbeitsstation entnimmt.

Im Folgenden wird ein vorteilhaftes Ausführungsbeispiel der Erfindung anhand einer Zeichnung näher erläutert. Im Einzelnen zeigen:
- Figur 1: ein Ausführungsbeispiel einer erfindungsgemäßen Verpackungsmaschine in Form einer Tiefziehverpackungsmaschine,
- Figur 2: eine schematische Darstellung einer erfindungsgemäßen Arbeitstation in der geöffneten Stellung des Werkzeugs,
- Figur 3: eine schematische Darstellung der in Figur 2 gezeigten Arbeitsstation bei geschlossenem Werkzeug,
- Figur 4: eine Darstellung der in den Figuren 2 und 3 gezeigten Arbeitsstation mit einem Werkzeugwechselwagen und miteinander gekoppelten Werkzeugteilen und
- Figur 5: eine schematische Ansicht der Arbeitsstation nach dem Anhaben von Ober- und Unterwerkzeug.

Gleiche Komponenten sind in den Figuren durchgängig mit gleichen Bezugszeichen versehen.

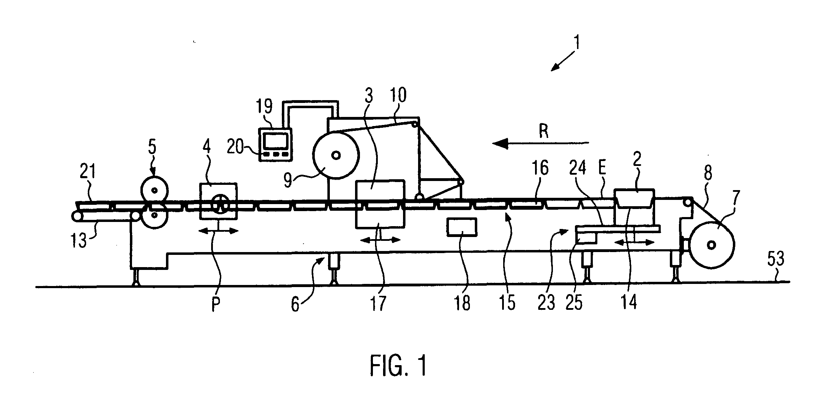

Figur 1 zeigt in schematischer Ansicht eine erfindungsgemäße Verpackungsmaschine 1 in Form einer Tiefziehverpackungsmaschine. Diese Tiefziehverpackungsmaschine 1 weist eine Formstation 2, eine Siegelstation 3, eine Querschneideinrichtung 4 und eine Längsschneideinrichtung 5 auf, die in dieser Reihenfolge in einer Arbeitsrichtung R an einem Maschinengestell 6 angeordnet sind. Die Querschneideinrichtung 4 ist in diesem Ausführungsbeispiel als erfindungsgemäße Schneideinrichtung ausgebildet, die weiter unten ausführlich beschrieben wird.

Eingangsseitig befindet sich an dem Maschinengestell 6 eine Zufuhrrolle 7, von der ein erstes bahnförmiges Verpackungsmaterial 8 abgezogen wird. Im Bereich der Siegelstation 3 ist ein Materialspeicher 9 vorgesehen, von dem ein zweites bahnförmiges Material 10 als Deckelfolie abgezogen wird. Ausgangsseitig ist an der Verpackungsmaschine eine Abfuhreinrichtung 13 in Form eines Transportbandes vorgesehen, mit der fertige, vereinzelte Verpackungen 21 abtransportiert werden. Ferner weist die Verpackungsmaschine 1 eine nicht dargestellte Vorschubeinrichtung auf, die das erste bahnförmige Material 8 ergreift und in einem Hauptarbeitstakt taktweise in der Arbeitsrichtung R weitertransportiert.

Die Vorschubeinrichtung kann zum Beispiel durch seitlich angeordnete Transportketten realisiert sein.

In der dargestellten Ausführungsform ist die Formstation 2 als eine Tiefziehstation ausgebildet, in der in dem ersten bahnförmigen Material 8 durch Tiefziehen Behälter 14 geformt werden. Dabei kann die Formstation 2 derart ausgebildet sein, dass in der Richtung senkrecht zur Arbeitsrichtung R mehrere Behälter nebeneinander gebildet werden. In Arbeitsrichtung R hinter der Formstation 2 ist eine Einlegestrecke 15 vorgesehen, in der die in dem ersten bahnförmigen Material 8 geformten Behälter 14 mit Produkt 16 befüllt werden.

Die Siegelstation 3 verfügt über eine verschließbare Kammer 17, in der die Atmosphäre in den Behälter 14 vor dem Versiegeln zum Beispiel durch Gasspülen mit einem Austauschgas oder mit einem Austausch-Gasgemisch ersetzt werden kann.

Die Querschneideinrichtung 4 ist als Stanze ausgebildet, die das erste bahnförmige Material 8 und das zweite bahnförmige Material 10 in einer Richtung quer zur Arbeitsrichtung R zwischen benachbarten Behältern 14 durchtrennt. Dabei arbeitet die Querschneideinrichtung 4 derart, dass das erste bahnförmige Material 8 nicht über die gesamte Breite aufgeteilt wird, sondern zumindest in einem Randbereich nicht durchtrennt wird. Dies ermöglicht einen kontrollierten Weitertransport durch die Vorschubeinrichtung.

Die Längsschneideinrichtung 5 ist in der dargestellten Ausführungsform als eine Messeranordnung ausgebildet, mit der das erste bahnförmige Material 8 und das zweite bahnförmige Material 10 zwischen benachbarten Behältern 14 und am seitlichen Rand des ersten bahnförmigen Materials 8 durchtrennt werden, so dass hinter der Längsschneideinrichtung 5 vereinzelte Verpackungen 21 vorliegen.

Die Verpackungsmaschine 1 verfügt ferner über eine Steuerung 18. Sie hat die Aufgabe, die in der Verpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

Die generelle Arbeitsweise der Verpackungsmaschine 1 wird im Folgenden kurz dargestellt.

Das erste bahnförmige Material 8 wird von der Zufuhrrolle 7 abgezogen und durch die Vorschubeinrichtung in die Formstation 2 transportiert. In der Formstation 2 werden durch Tiefziehen Behälter 14 in dem ersten bahnförmigen Material 8 gebildet. Die Behälter 14 werden zusammen mit dem umgebenden Bereich des ersten bahnförmigen Materials 8 in einem Hauptarbeitstakt zu der Einlegestrecke 15 weitertransportiert, in der sie mit Produkt 16 befüllt werden.

Anschließend werden die befüllten Behälter 14 zusammen mit dem sie umgebenden Bereich des ersten bahnförmigen Materials 8 in dem Hauptarbeitstakt durch die Vorschubeinrichtung in die Siegelstation 3 weitertransportiert. Das zweite bahnförmige Material 10 wird als Deckelfolie nach einem Ansiegelvorgang an das erste bahnförmige Material 8 mit der Vorschubbewegung des ersten bahnförmigen Materials 8 weitertransportiert. Dabei wird das zweite bahnförmige Material 10 von dem Materialspeicher 9 abgezogen. Durch das Ansiegeln der Deckelfolie 10 an die Behälter 14 entstehen verschlossene Verpackungen 21.

In den Schneideinrichtungen 4, 5 werden die Verpackungen 21 vereinzelt, indem die Materialbahnen 8, 10 in Quer- bzw. Längsrichtung durchtrennt werden. Die Querschneideinrichtung 4 ist ein Beispiel einer erfindungsgemäßen Schneideinrichtung.

Wie durch die Doppelpfeile P angedeutet, können die Arbeitsstationen 2, 3, 4 der Verpackungsmaschine 1 in Transportrichtung R verstellt werden. Dies ermöglicht es, die Arbeitsstation 2, 3, 4 auf unterschiedliche Abzugslängen der Verpackungsfolien 8, 10 einzustellen, d.h. auf unterschiedliche Vorschublängen der Verpackungsfolien 8, 10 während eines einzigen Arbeitstaktes beim intermittierenden Betrieb der Verpackungsmaschine 1. Insbesondere kann durch die Verstellbarkeit der Arbeitsstationen 2, 3, 4 sichergestellt werden, dass auch bei einer Veränderung der Abzugslänge das Werkzeug jeder Arbeitsstation 2, 3, 4 bei einem ganzzahligen Vielfachen der neuen Abzugslänge angreift. Um diese Verstellung in Transportrichtung R bzw. in Längsrichtung der Verpackungsmaschine 1 zu gestatten, kann für jede Arbeitsstation eine Verstelleinrichtung 23 vorgesehen sein, die in Figur 1 schematisch nur für die Formstation 2 angedeutet ist, die aber entsprechend auch an der Siegelstation 3 oder an der Schneidstation 4 vorgesehen sein kann.

Eine solche Verstelleinrichtung 23 verfügt insbesondere über eine oder mehrere Führungsschienen 24, auf denen die Werkzeuge bzw. die gesamte Arbeitsstation 2 in Transportrichtung R verfahrbar sind, sowie über einen Antrieb 25 zum Bewirken der Verstellbewegung. Bei diesem Antrieb 25 kann es sich z.B. um einen Servomotor handeln, mittels dessen die jeweilige Arbeitsstation 2, 3, 4 bzw. ihr Werkzeug entlang der Führungsschienen 24 verstellt werden können. Der Servomotor 25 kann angesteuert werden, um eine bestimmte, vorgegebene Arbeitsposition des Werkzeugs einzustellen. Insbesondere wäre es denkbar, dass sämtliche Antriebe 25 aller Verstelleinrichtungen 23 aller Arbeitsstationen 2, 3, 4 mittels der gemeinsamen Maschinensteuerung 18 angesteuert werden, um die Position der jeweiligen Arbeitsstationen 2, 3, 4 aufeinander abzustimmen.

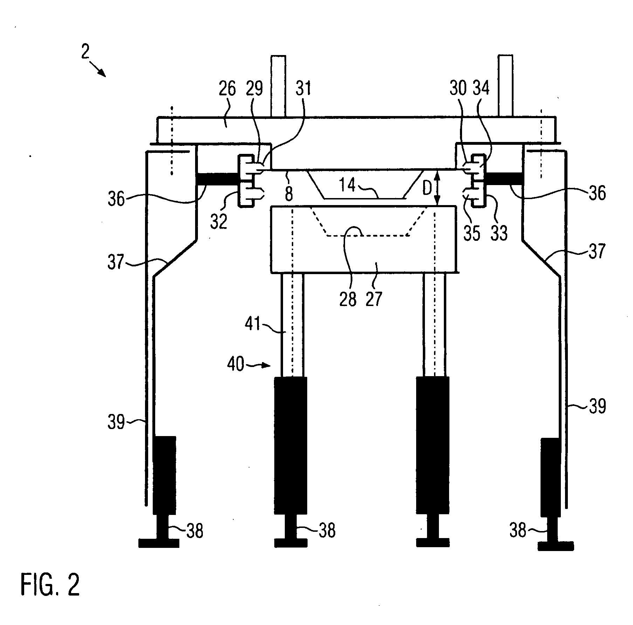

Figur 2 zeigt in Transportrichtung R schematisch die Formstation 2 der in Figur 1 gezeigten Verpackungsmaschine 1 als Beispiel einer erfindungsgemäßen Arbeitstation. Diese Formstation 2 verfügt über ein Oberwerkzeug 26 und ein Unterwerkzeug 27, die gemeinsam auf die Unterfolie bzw. Verpackungsfolie 8 einwirken können, um darin Verpackungsmulden 14 zu formen. Zu diesem Zweck kann das unterhalb des Oberwerkzeugs 26 angeordnete Unterwerkzeug 27 eine Tiefziehform 28 aufweisen, in die die Verpackungsfolie 8 zur Bildung der Mulden 14 tiefgezogen wird. Dieses Tiefziehen kann durch Ausüben eines Unterdrucks im Unterwerkzeug 27 und/oder durch Ausüben eines Oberdrucks auf die Verpackungsfolie 8 vom Oberwerkzeug 26 erfolgen.

Zum seitlichen Einklemmen und zum lateralen Spannen der Verpackungsfolie 8 ist eine Klammer- oder Transportkette 29, 30 auf jeder der beiden Seiten der Verpackungsfolie 8 vorgesehen. Jede Transportkette 29, 30 erstreckt sich in Transportrichtung R der Verpackungsmaschine 1 durch die Arbeitsstation 2 hindurch und verfügt über Klammerelemente 31 zum Festklemmen der Verpackungsfolie 8. Eine erste Kettenführung 32 führt und stabilisiert die erste Kette 29, während eine zweite Kettenführung 33 auf der gegenüberliegenden Seite der Verpackungsfolie 8 die zweite Kette 30 führt und stabilisiert. Jede Kettenführung 32, 33 führt sowohl das Obertrum 34 der jeweiligen Transportkette 29, 30, welches die Verpackungsfolie 8 klemmt und transportiert, als auch das in der Kettenführung 32, 33 zurücklaufende Untertrum 35 der Transportkette 29, 30.

Jede der beiden Kettenführungen 32, 33 ist über Befestigungselemente 36 an einem seitlichen Halterungsprofil 37 befestigt. Dieses Halterungsprofil 37 steht mit Füßen 38 auf einer Bodenfläche und ist nach außen durch eine Verkleidungsplatte 39 verkleidet.

Ein Hubwerk 40 ist in der Arbeitstation 2 vorgesehen und dient zum Anheben bzw. Absenken des Unterwerkzeugs 27. Das Hubwerk 40 verfügt über mehrere pneumatisch oder hydraulisch antreibbare Teleskopstangen 41, die das Unterwerkzeug 27 bzw. eine das Unterwerkzeug 27 tragende Plattform tragen. Die Teleskopstangen 41 stehen ebenfalls mit Füßen 38 auf einer Bodenfläche.

Mittels des Hubwerks 40 kann das Unterwerkzeug 27 angehoben und abgesenkt werden. Dies bedeutet, dass mit dieser Hubbewegung das aus Ober- und Unterwerkzeug 26, 27 gemeinsam gebildete Werkzeug der Formstation 2 zwischen einer geöffneten Stellung einer geschlossenen Stellung bewegt werden kann. Die geöffnete Stellung zeichnet sich durch einen größeren Abstand D der beiden Werkzeugteile 26, 27 voneinander im Vergleich zur geschlossenen Stellung aus. Die geöffnete Stellung des Werkzeugs ist in Figur 2 dargestellt. In ihr haben die beiden Werkzeugteile 26, 27, d.h. Ober- und Unterwerkzeug 26, 27, einen vergleichsweise großen Abstand D voneinander. Dieser Abstand ist so groß, dass die in der Verpackungsfolie 8 geformten Verpackungsmulden 14 zwischen den beiden Werkzeugteilen hindurch transportiert werden können.

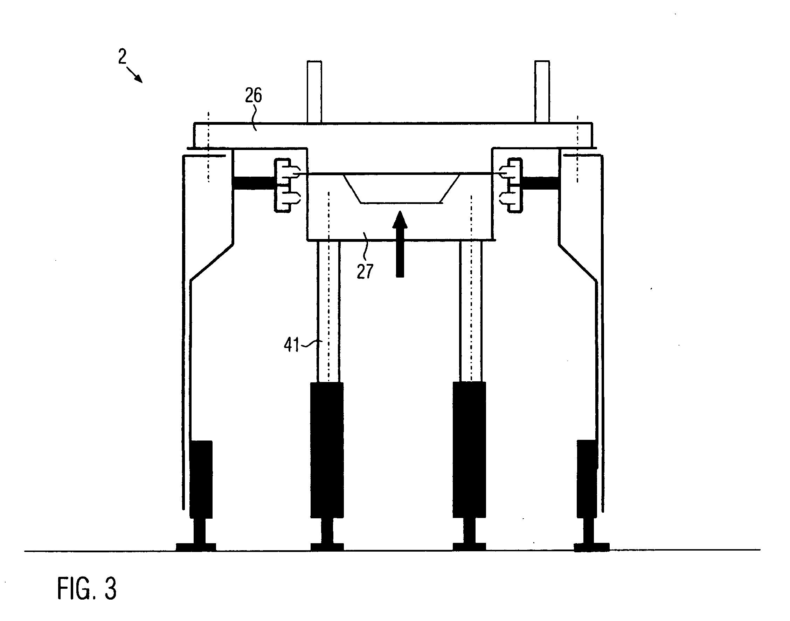

Figur 3 zeigt das Werkzeug der Formstation 2 hingegen in seiner geschlossenen Stellung. In dieser Stellung liegen Ober- und Unterwerkzeug 26, 27 aneinander an, oder sie haben nur noch einen minimalen Abstand voneinander, der im Bereich der Dicke der Verpackungsfolie 8 liegt. In dieser geschlossenen Stellung des Werkzeugs wirken Ober- und Unterwerkzeug 26, 27 auf die Verpackungsfolie 8 ein. Das Oberwerkzeug 26 kann über eine (nicht gezeigte) Heizeinrichtung zum Erwärmen der Verpackungsfolie 8 verfügen. Das Ausfahren der Teleskopstangen 41 des Hubwerks 40 zum Anheben des Unterwerks 27 ist in Figur 3 mit einem Pfeil dargestellt.

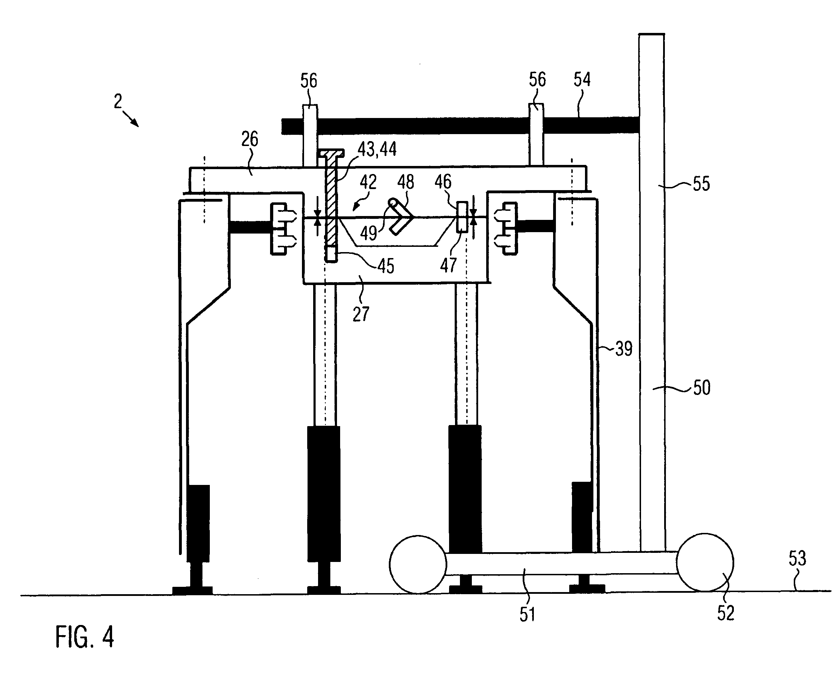

Auch in Figur 4 befindet sich das aus Ober- und Unterwerkzeug 26, 27 bestehende Werkzeug der Arbeitsstation 2 in seiner geschlossenen Stellung, in der Oberwerkzeug 26 und Unterwerkzeug 27 aneinander anliegen. In Figur 4 ist nun zusätzlich gezeigt, dass eine Kopplung 42 zum lösbaren Koppeln von Oberwerkzeug 26 und Unterwerkzeug 27 vorgesehen ist. Diese Kopplung 42 befindet sich an der Grenzfläche zwischen Oberwerkzeug 26 und Unterwerkzeug 27. Die Kopplung 42 kann mehrere lösbare mechanische und/oder magnetische Befestigungselemente 43 aufweisen. Als ein Beispiel eines mechanischen Befestigungselements 43 ist eine Zugschraube 44 dargestellt, die durch eine Bohrung im Oberwerkzeug 26 hindurch treten kann und in Eingriff mit einem Innengewinde einer Bohrung 45 im Unterwerkzeug 27 gelangt. Die Zugschraube 44 kann von einem Bediener der Arbeitsstation 2 in die Bohrung 45 eingeführt werden, um das Oberwerkzeug 26 lösbar mit dem Unterwerkzeug 27 zu koppeln.

Als zusätzliche oder alternative Variante für die Kopplung 42 zeigt Figur 4 einen im Oberwerkzeug 26 angeordneten Elektromagneten 46, der mit einem entsprechenden Gegenmagneten 47, beispielsweise einem Dauermagneten, im Unterwerkzeug 27 zusammenwirkt. Der Elektromagnet 46 und der Gegenmagnet 47 sind so angeordnet, dass sie bei geschlossenem Werkzeug einander unmittelbar gegenüberliegen. Bei geeigneter Bestromung des Elektromagneten 46 entwickelt dieser ein Magnetfeld, dessen Kraft auf den Gegenmagneten 47 ausreicht, um (gegebenenfalls zusammen mit anderen Befestigungselementen 43 der Kopplung 42) das Unterwerkzeug 27 lösbar mit dem Oberwerkzeug 26 zu koppeln. In jedem Fall ist diese Kopplung 42 stark genug, um die Gewichtskraft des Unterwerkzeugs 27 zu tragen, wenn dieses am Oberwerkzeug 26 hängt.

Als weitere Variante der Kopplung 42 könnte eine ansteuerbare mechanische Verriegelungsvorrichtung 48 vorgesehen sein. Diese ist in Figur 4 als Verriegelungshaken 48 angedeutet, der händisch oder mittels eines geeigneten elektrischen oder pneumatischen Antriebs um eine Schwenkachse 49 schwenkbar ist. Bei entsprechender Schwenkposition gelangt der Verriegelungshaken 48 in Eingriff mit einer geeigneten Verriegelungsausnehmung im Unterwerkzeug 27.

Ferner zeigt Figur 4 einen Werkzeugwechselwagen 50, der zum Anheben des Werkzeugs wenigstens teilweise in die Arbeitsstation 2 einfahrbar ist. Zu diesem Zweck verfügt die Arbeitsstation 2 über eine gegebenenfalls durch Öffnen einer Klappe in der Seitenverkleidung 39 freilegbare Öffnung, in die der Werkzeugwagen 50 einfahrbar ist.

Der Werkzeugwechselwagen 50 verfügt über eine vergleichsweise schwere, den Schwerpunkt nach unten verlagernde Basis 51, die mittels Rollen 52 auf einer Bodenfläche 53 verfahrbar ist. Der Werkzeugwechselwagen 50 verfügt ferner über einen Ausleger 54, der höhenverstellbar an einem vertikal auf der Basis 51 befestigten Gestell 55 montiert ist. Das Oberwerkzeug 26 weist Ankoppelelemente 56 auf, mittels derer das Oberwerkzeug 26 lösbar an den Ausleger 54 angekoppelt werden kann. Die Ankoppelelemente 56 können Ösen sein, in die der Ausleger 54 einführbar ist.

Wenn der Werkzeugwechselwagen 50 - wie in Figur 4 gezeigt - teilweise in die Arbeitsstation 2 eingefahren ist, befindet sich der Ausleger 54 oberhalb des Oberwerkzeugs 26. Der Ausleger 54 kann z.B. durch Ausfahren nach vorne in die Ankoppelelemente 56 am Oberwerkzeug 26 angekoppelt werden. Diese Ankoppelelemente können die Gewichtskraft sowohl des Oberwerkzeugs 26, als auch des damit gekoppelten Unterwerkzeugs 27 tragen.

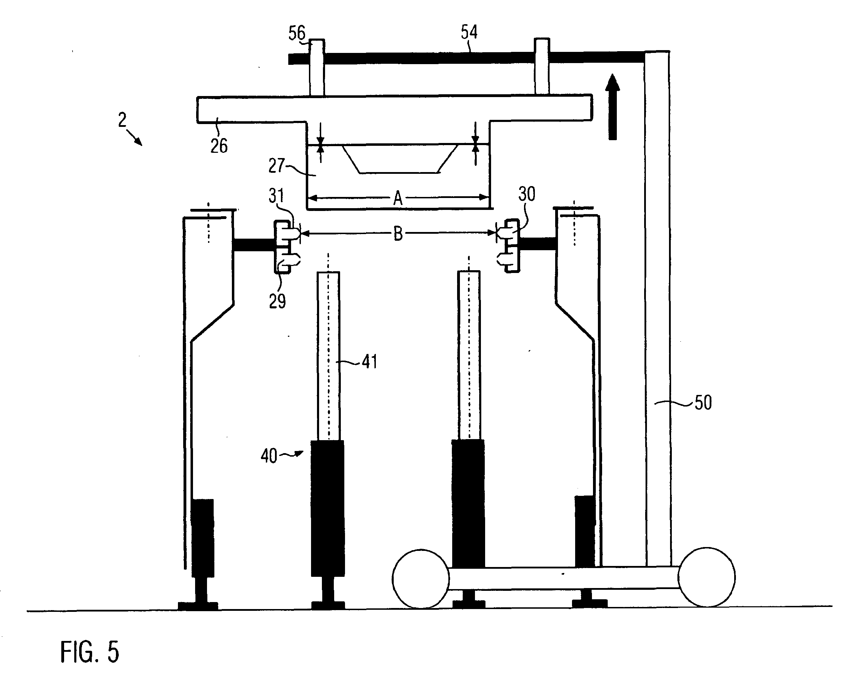

Figur 5 zeigt den Zustand der Arbeitsstation 2 nach dem Anheben des Auslegers 54 des Werkzeugwechselwagens 50. Dieses Anheben ist durch einen Pfeil angedeutet. Die Ankoppelelemente 56 am Oberwerkzeug 26 sind an den Ausleger 54 angekoppelt. Das Oberwerkzeug 26 ist seinerseits über die Kopplung 42 mit dem Unterwerkzeug 27 gekoppelt. Beim Anheben des Auslegers 54 werden also sowohl das Oberwerkzeug 26, als auch das Unterwerkzeug 27 angehoben. Dabei wird das Unterwerkzeug 27 von den Teleskopstangen 41 des Hubwerks 40 abgehoben. In Querrichtung zur Transportrichtung R ist die maximale Abmessung A des Unterwerkzeugs 27 kleiner als der horizontale Abstand B der Klammerelemente 31 der beiden seitlichen Transportketten 29, 30 voneinander. Dies erlaubt es, das Unterwerkzeug 27 vertikal nach oben aus der Formstation 2 heraus zu ziehen, ohne dazu die Klammerketten 29, 30 oder deren Kettenführungen 32, 33 entfernen zu müssen. Mittels des Werkzeugwagens 50 kann das Werkzeug 26, 27 so angehoben werden, dass es in horizontaler Richtung von der Formstation 2 entfernt werden kann, wenn der Werkzeugwechselwagen 50 mittels der Rollen 52 seitwärts bewegt wird.

Im Betrieb der erfindungsgemäßen Verpackungsmaschine 1 bzw. zum Durchführen des erfindungsgemäßen Verfahrens wird das von Unterwerkzeug 27 und Oberwerkzeug 26 gebildete Werkzeug der Arbeitsstation 2 in seine geschlossene Stellung gebracht. In dieser geschlossenen Stellung werden Ober- und Unterwerkzeug 26, 27 mittels der Kopplung 42 miteinander gekoppelt. Beispielsweise führt ein Bediener dazu Zugschrauben 44 durch das Oberwerkzeug 26 in eine Bohrung 54 im Unterwerkzeug 27 ein. Anschließend wird ein Werkzeugwechselwagen 50 in die Arbeitsstation 2 hinein gefahren. Ankoppelelemente 56 koppeln das Oberwerkzeug 26 an einen Ausleger 54 des Werkzeugwechselwagens 50.

Wenn der Ausleger 54 angehoben wird, werden sowohl das Oberwerkzeug 26, als auch das damit gekoppelte Unterwerkzeug 27 nach oben aus der Arbeitstation 2 herausgehoben. Sie können nun seitlich entfernt werden. Das Einsetzen eines neuen Werkzeugs erfolgt genau in umgekehrter Reihenfolge. Dazu wird das neue Werkzeug mittels eines Werkzeugwechselwagens 50 über der Arbeitsstation 2 positioniert und durch das Absenken des Auslegers 54 abgesenkt. Sobald sich das Unterwerkzeug 27 in seiner endgültigen Position befindet, kann die Kopplung 42 gelöst werden. Anschließend kann der Betrieb der Arbeitsstation 2 aufgenommen werden.

Denkbar ist es - wie bereits ausgeführt - ,dass die Werkzeuge 26, 27 der Arbeitsstation 2 in Transportrichtung R verstellbar sind. Das Auswechseln oder Entfernen der Werkzeuge wird dadurch erleichtert, wenn es trotz dieser Verstellmöglichkeit eine feste, vorgegebene Werkzeugwechselposition gibt, an der der Werkzeugwechselwagen 50 die Werkzeuge entnehmen kann. Dies erleichtert einen weitgehend automatisierten Werkzeugwechselvorgang. Wenn solch eine vorgegebene Werkzeugwechselposition vorliegt, können die Werkzeugteile 26, 27 gegebenenfalls zunächst mittels der Verstelleinrichtung 23 aus einer Arbeitsposition in die Werkzeugwechselposition gebracht werden, um dort mittels des Werkzeugwechselwagens 50 ausgewechselt zu werden. Das Einsetzen neuer Werkzeugteile 26, 27 erfolgt genau in umgekehrter Reihenfolge.

Ausgehend von dem dargestellten Ausführungsbeispiel können die erfindungsgemäße Arbeitstation 2, die erfindungsgemäße Verpackungsmaschine 1 und das erfindungsgemäße Verfahren in vielfacher Hinsicht abgewandelt werden. Beispielsweise ist es denkbar, dass ein Werkzeugwechsel nicht an einer Formstation 2, sondern an einer Siegelstation 3 oder an einer Schneidstation 4, 5 erfolgt. Ebenso wäre es denkbar, dass die Werkzeugteile 26, 27 durch einen fest in einer Maschinenhalle installierten Kran entnommen werden, nicht aber durch einen Werkzeugwechselwagen 50. Schließlich kann es sich bei der Maschine 1 auch um eine Schalenverschließmaschine, Kammermaschine oder einen anderen Maschinentyp handeln.

## Patentansprüche

1. Arbeitsstation (2) für eine Verpackungsmaschine (1) mit einem Oberwerkzeug (26) und einem unterhalb des Oberwerkzeugs (26) angeordneten Unterwerkzeug (27), wobei Ober- und Unterwerkzeug (26, 27) konfiguriert sind zum Einwirken auf eine Verpackungsfolie (8), und wobei ein Hubwerk (40) zum Bewegen wenigstens eines von Ober- und Unterwerkzeug (26, 27) zwischen wenigstens einer abgesenkten Stellung und wenigstens einer angehobenen Stellung vorgesehen ist, so dass Ober- und Unterwerkzeug (26, 27) in der einen der beiden Stellungen aneinander anliegen oder einen kleineren Abstand voneinander haben als in der anderen Stellung,
**dadurch gekennzeichnet, dass** das Oberwerkzeug (26) und das Unterwerkzeug (27) in derjenigen Stellung, in der sie aneinander anliegen oder den kleineren Abstand voneinander haben als in der anderen Stellung, durch eine lösbare Kopplung (42) miteinander koppelbar sind, um gemeinsam nach oben aus der Arbeitsstation (2) entnehmbar zu sein.

2. Arbeitsstation nach Anspruch 1, **dadurch gekennzeichnet, dass** die Kopplung (42) mechanische Befestigungselemente (43) umfasst.

3. Arbeitsstation nach einem der vorangehenden Ansprüche, **dadurch gekennzeichnet, dass** die Kopplung (42) eine oder mehrere Schrauben (44) umfasst.

4. Arbeitsstation nach einem der vorangehenden Ansprüche, **dadurch gekennzeichnet, dass** die Kopplung (42) wenigstens eine ansteuerbare Verriegelungsvorrichtung (48) aufweist.

5. Arbeitsstation nach Anspruch 4, **dadurch gekennzeichnet, dass** die Verriegelungsvorrichtung (48) händisch, elektrisch und/oder mittels Druckluft antreibbar ist.

6. Arbeitsstation nach einem der vorangehenden Ansprüche, **dadurch gekennzeichnet, dass** zwei seitliche Transportketten (29, 30) für die Verpackungsfolie (8) vorgesehen sind, und dass die maximale Abmessung des Unterwerkzeugs (27) quer zu einer Transportrichtung (R) der Verpackungsfolie (8) kleiner ist als der Abstand der beiden Transportketten (29, 30) voneinander.

7. Arbeitsstation nach einem der vorangehenden Ansprüche, **dadurch gekennzeichnet, dass** das Unterwerkzeug (27) lösbar mit dem Hubwerk (40) verbindbar ist.

8. Arbeitsstation nach einem der vorangehenden Ansprüche, **dadurch gekennzeichnet, dass** eine Verstelleinrichtung (23) zum Verstellen der Position von Ober- und/oder Unterwerkzeug (26, 27) in einer Transportrichtung (R) der Verpackungsfolie (8) vorgesehen ist.

9. Arbeitsstation nach einem der vorangehenden Ansprüche, **dadurch gekennzeichnet, dass** die Verstelleinrichtung (23) wenigstens eine Führungsschiene (24) aufweist.

10. Arbeitsstation nach einem der vorangehenden Ansprüche, **dadurch gekennzeichnet, dass** an wenigstens einer vorgegebenen Werkzeugwechselposition an der Arbeitsstation (2) ein Werkzeugwechselwagen (50) wenigstens teilweise in die Arbeitsstation (2) einfahrbar ist.

11. Verpackungsmaschine (1) mit einer Arbeitsstation (2) nach einem der vorangehenden Ansprüche.

12. Verfahren zum Entnehmen eines Unterwerkzeugs (27) aus einer Arbeitsstation (2) einer Verpackungsmaschine (1), wobei die Arbeitsstation (2) ein Oberwerkzeug (26) und ein unterhalb des Oberwerkzeugs (26) angeordnetes Unterwerkzeug (27) aufweist, und wobei ein Hubwerk (40) zum Bewegen wenigstens eines von Ober- und Unterwerkzeug (26, 27) zwischen wenigstens einer abgesenkten Stellung und wenigstens einer angehobenen Stellung vorgesehen ist, so dass Ober- und Unterwerkzeug (26, 27) in der einen der beiden Stellungen aneinander anliegen oder einen kleineren Abstand voneinander haben als in der anderen Stellung,
**gekennzeichnet durch** ein Koppeln von Oberwerkzeug (26) und Unterwerkzeug (27) in derjenigen Stellung, in der sie aneinander anliegen oder den kleineren Abstand voneinander haben als in der anderen Stellung, **durch** eine lösbare Kopplung (42), und **durch** ein Entnehmen vom Oberwerkzeug (26) und dem mit dem Oberwerkzeug (26) gekoppelten Unterwerkzeug (27) nach oben aus der Arbeitsstation (2).

13. Verfahren nach Anspruch 12, **dadurch gekennzeichnet, dass** das Unterwerkzeug (27) beim Entnehmen aus der Arbeitsstation (2) zwischen zwei seitlichen Transportketten (29, 30) nach oben gehoben wird.

14. Verfahren nach einem der Ansprüche 12 oder 13, **dadurch gekennzeichnet, dass** ein Werkzeugwechselwagen (50) wenigstens teilweise in die Arbeitsstation (2) eingefahren wird und das Oberwerkzeug (27) und das mit dem Oberwerkzeug (26) gekoppelte Unterwerkzeug (27) aus der Arbeitsstation (2) entnimmt.

## Claims

1. A work station (2) for a packaging machine (1), comprising an upper tool (26) and a lower tool (27) arranged below the upper tool (26), wherein said upper and lower tools (26, 27) are configured for acting on a packaging web (8), and wherein a lifting unit (40) is provided for moving at least one of said upper and lower tools (26, 27) between at least one lowered position and at least one raised position, so that, in one of said two positions, said upper and lower tools (26, 27) abut on one another or are spaced apart at a smaller distance than in the other position,
**characterized in that**, in the position in which the upper tool (26) and the lower tool (27) abut on one another or are spaced apart at a smaller distance than in the other position, said upper and lower tools (26, 27) are adapted to be coupled to one another by a releasable coupling (42) so that they can be removed upwards from the work station (2) in common.

2. A work station according to claim 1, **characterized in that** the coupling (42) comprises mechanical fastening elements (43).

3. A work station according to one of the preceding claims, **characterized in that** the coupling (42) comprises one or a plurality of screws (44).

4. A work station according to one of the preceding claims, **characterized in that** the coupling (42) comprises at least one controllable locking device (48).

5. A work station according to claim 4, **characterized in that** the locking device (48) is adapted to be driven manually, electrically and/or by means of pressurized air.

6. A work station according to one of the preceding claims, **characterized in that** two lateral transport chains (29, 30) for the packaging web (8) are provided, and that, in a direction transversely to the direction of transport (R) of the packaging web (8), the maximum dimension of the lower tool (27) is smaller than the distance between the two transport chains (29, 30).

7. A work station according to one of the preceding claims, **characterized in that** the lower tool (27) is adapted to be releasably connected to the lifting unit (40).

8. A work station according to one of the preceding claims, **characterized in that** an adjustment unit (23) is provided for adjusting the position of the upper and/or lower tools (26, 27) in a direction of transport (R) of the packaging web (8).

9. A work station according to one of the preceding claims, **characterized in that** the adjustment unit (23) includes at least one guide rail (24).

10. A work station according to one of the preceding claims, **characterized in that**, at at least one predetermined tool changing position at the work station (2), a tool changing carriage (50) can, at least partially, be moved into the work station (2).

11. A packaging machine (1) comprising a work station (2) according to one of the preceding claims.

12. A method of removing a lower tool (27) from a work station (2) of a packaging machine (1), said work station (2) comprising an upper tool (26) and a lower tool (27) arranged below the upper tool (26), and a lifting unit (40) being provided for moving at least one of said upper and lower tools (26, 27) between at least one lowered position and at least one raised position, so that, in one of said two positions, said upper and lower tools (26, 27) abut on one another or are spaced apart at a smaller distance than in the other position,
**characterized in that** the upper tool (26) and the lower tool (27) are coupled, by means of a releasable coupling (42), in the position in which they abut on one another or are spaced apart at a smaller distance than in the other position, and **in that** the upper tool (26) and the lower tool (27) coupled to said upper tool (26) are removed in an upwards direction from the work station (2).

13. A method according to claim 12, **characterized in that**, when the lower tool (27) is being removed from the work station (2), it is raised in an upward direction between two lateral transport chains (29, 30).

14. A method according to one of the claims 12 or 13, **characterized in that** a tool changing carriage (50) is moved into the work station (2), at least partially, and removes the upper tool (26) and the lower tool (27) coupled to said upper tool (26) from the work station (2).

## Revendications

1. Station de travail (2) pour une machine d'emballage (1) comportant un outil supérieur (26) et un outil inférieur (27) agencé en dessous de l'outil supérieur (26), dans laquelle les outils supérieur et inférieur (26, 27) sont configurés pour agir sur un film d'emballage (8), et dans laquelle un dispositif de levage (40) est pourvu pour déplacer au moins l'un des outils supérieur et inférieur (26, 27) entre au moins une position abaissée et au moins une position levée, de telle sorte que dans l'une des deux positions, les outils supérieur et inférieur (26, 27) sont en contact entre eux ou présentent un plus faible espacement entre eux que dans l'autre position,
**caractérisée en ce que** l'outil supérieur (26) et l'outil inférieur (27) peuvent être accouplés entre eux par un accouplement débrayable (42) dans ladite position où ils sont en contact entre eux ou présentent un plus faible espacement entre eux que dans l'autre position, de manière à pouvoir être extraits conjointement de la station de travail (2) vers le haut.

2. Station de travail selon la revendication 1, **caractérisée en ce que** l'accouplement (42) comporte des éléments de fixation mécaniques (43).

3. Station de travail selon l'une des revendications précédentes, **caractérisée en ce que** l'accouplement (42) comporte une ou plusieurs vis (44).

4. Station de travail selon l'une des revendications précédentes, **caractérisée en ce que** l'accouplement (42) comporte au moins un dispositif de verrouillage contrôlable (48).

5. Station de travail selon la revendication 4, **caractérisée en ce que** le dispositif de verrouillage (48) peut être entraîné manuellement, électriquement et/ou par air comprimé.

6. Station de travail selon l'une des revendications précédentes, **caractérisée en ce que** deux chaînes de transport latérales (29, 30) sont pourvues pour le film d'emballage (8), et **en ce que** la dimension maximale de l'outil inférieur (27) transversalement à une direction de transport (R) du film d'emballage (8) est inférieure à l'espacement entre les deux chaînes de transport (29, 30).

7. Station de travail selon l'une des revendications précédentes, **caractérisée en ce que** l'outil inférieur (27) peut être connecté de façon détachable au dispositif de levage (40).

8. Station de travail selon l'une des revendications précédentes, **caractérisée en ce qu'**un dispositif de déplacement (23) est pourvu pour changer la position de l'outil supérieur et/ou de l'outil inférieur (26, 27) dans une direction de transport (R) du film d'emballage (8).

9. Station de travail selon l'une des revendications précédentes, **caractérisée en ce que** le dispositif de déplacement (23) comporte au moins un rail de guidage (24).

10. Station de travail selon l'une des revendications précédentes, **caractérisée en ce qu'**un chariot de changement d'outil (50) peut être conduit au moins partiellement dans la station de travail (2) dans au moins une position de changement d'outil prédéterminée sur la station de travail (2).

11. Machine d'emballage (1) comportant une station de travail (2) selon l'une des revendications précédentes.

12. Procédé d'extraction d'un outil inférieur (27) d'une station de travail (2) d'une machine d'emballage (1), dans lequel la station de travail (2) comporte un outil supérieur (26) et un outil inférieur (27) agencé en dessous de l'outil supérieur (26), et dans lequel un dispositif de levage (40) est pourvu pour déplacer au moins l'un des outils supérieur et inférieur (26, 27) entre au moins une position abaissée et au moins une position levée, de telle sorte que dans l'une des deux positions, les outils supérieur et inférieur (26, 27) sont en contact entre eux ou présentent un plus faible espacement entre eux que dans l'autre position,
**caractérisé par** un accouplement de l'outil supérieur (26) et de l'outil inférieur (27) dans la position dans laquelle ils sont en contact entre eux ou présentent un plus faible espacement entre eux que dans l'autre position, à l'aide d'un accouplement débrayable (42) et par l'extraction vers le haut de l'outil supérieur (26) et de l'outil inférieur (27) accouplé à l'outil supérieur (26) hors de la station de travail (2).

13. Procédé selon la revendication 12, **caractérisé en ce que** l'outil inférieur (27) est soulevé vers le haut entre deux chaînes de transport latérales (29, 30) lors de l'extraction hors de la station de travail (2).

14. Procédé selon l'une des revendications 12 ou 13, **caractérisé en ce qu'**un chariot de changement d'outil (50) est conduit au moins partiellement dans la station de travail (2) et extrait l'outil supérieur (27) et l'outil inférieur (27) accouplé à l'outil supérieur (26) hors de la station de travail (2).
